# Europäisches Patentamt

## European Patent Office

## Office européen des brevets

(11) Veröffentlichungsnummer: **0 154 938**
**B1**

(12) **EUROPÄISCHE PATENTSCHRIFT**

(45) Veröffentlichungstag der Patentschrift: **27.12.90**

(21) Anmeldenummer: **85102573.4**

(22) Anmeldetag: **07.03.85**

(51) Int. Cl.⁵: **C 08 L 45/00**, C 08 L 51/00, H 01 B 3/44

(54) **Elektrisch leitfähige thermoplastische Mischungen aus makromolekularen Verbindungen und feinteiligen Pyrrolpolymerisaten.**

(30) Priorität: **15.03.84 DE 3409462**

(43) Veröffentlichungstag der Anmeldung:
**18.09.85 Patentblatt 85/38**

(45) Bekanntmachung des Hinweises auf die Patenterteilung:
**27.12.90 Patentblatt 90/52**

(84) Benannte Vertragsstaaten:
**BE DE FR GB NL**

(56) Entgegenhaltungen:
**EP-A-0 101 894**
**FR-A-1 406 500**
**FR-A-1 419 613**

(73) Patentinhaber: **BASF Aktiengesellschaft**
**Carl-Bosch-Strasse 38**
**D-6700 Ludwigshafen (DE)**

(72) Erfinder: **Naarmann, Herbert, Dr.**
**Haardtblick 15**
**D-6719 Wattenheim (DE)**
Erfinder: **Schmitt, Burghard, Dr.**
**Braeunigstrasse 12**
**D-6520 Worms (DE)**
Erfinder: **Barzynski, Helmut, Dr.**
**An der Ameisenhalde 49**
**D-6702 Bad Duerkheim (DE)**

Courier Press, Leamington Spa, England.

**Beschreibung**

Die Erfindung betrifft ein Verfarhen zur Herstellung von thermoplastischen Mischungen die Pyrrolpolymerisate bestimmter mittlerer Teilchengröße enthalten, die in einer Matrix einer makromolekularen Verbindung eingebettet sind.

Nach einer Arbeit von K. C. Khulke und R. S. Mann, Journal of Polymer Science, vol 20 (1982), Seiten 1089 bis 1055, kann Pyrrol in wäßriger Lösung unter der Einwirkung von Kaliumpersulfat polymerisiert werden, so daß sich das Polymerisat in Form eines feinteiligen schwarzen Pulvers abscheidet.

Für viele Anwendungszwecke, beispielsweise zur Herstellung von Elektronik-Bauteilen, elektrischen Schaltern, speziellen Elektrodenmaterialien etc. ist es notwendig oder erstrebenswert, die elektrisch leitfähigen feinpulvrigen Pyrrolpolymeren durch einen weiteren Verarbeitungsschritt in die gewünschte Anwendungsform zu überführen. Beispielsweise müssen pulverförmige Pyrrolpolymeren für die Anwendung im allgemeinen zu entsprechenden Formkörpern verpreßt werden. Gemäß der älteren, nicht vorveröffentlichten deutschen Patentanmeldung P 32 27 914.0 können feinteilige Pyrrolpolymere bei temperaturen von 150 bis 300°C und bei Drucken von mindestens 50 bar zu Formkörpern verpreßt werden.

Nach einem älteren Vorschlag gemäß der nicht vorveröffentlichten deutschen Patentanmeldung P 33 25 892.9 kann die elektrische Leitfähigkeit von feinteiligen Pyrrolpolymerisaten dadurch verbessert werden, daß man die Behandlung der Pyrrole mit Sauerstoff enthaltenden Oxidationsmitteln in Gegenwart sogenannter Leitsalze durchführt.

Es hat sich gezeigt, daß die bislang zur Verfügung stehenden feinteiligen Pyrrolpolymerisate in ihren Eigenschaften noch nicht allen Anforderungen genügen. Insbesondere ist die thermoplastische Verarbeitbarkeit der Produkte zer Herstellung von Formkörpern noch nicht befriedigend.

Aufgabe der Erfindung ist es daher, ein Verfahren zur Herstellung von thermoplastischen Mischungen aus Pyrrolpolymerisate einerseits und anderen makromolekularen Verbindungen andereseits zu schaffen, dessen Verfahrensprodukte im vorstehenden Sinne besser befriedigen.

Die Aufgabe der Erfindung wird gelöst durch ein Verfarhen der eingangs bezeichneten Art, das Mischungen liefert, in denen die Pyrrolpolymerisate eine mittlere Teilchengröße von 0,1 bis 10 µm haben und in einer Matrix der makromolekularen Verbindung eingebettet sind.

Zur Herstellung der thermoplastischen Mischungen, die makromolekulare Verbindungen und ein Pyrrolpolymerisat enthalten, wird eine Lösung einer makromolekularen Verbindung und einer Verbindung aus der Klasse der Pyrrole oder eines Gemisches einer Verbindung aus der Klasse der Pyrrole und einer anderen, mit Pyrrol copolymerisierbaren Verbindung und einem Sauerstoff enthaltenden Oxidationsmittel behandelt, wobei Polymerisation stafffindet. Die erhaltene Mischung wird anschließend vom Lösungsmittel getrennt.

Bei den erfindungsgemäßen thermoplastischen Mischungen handelt es sich um elektrisch leitfähige Systeme. Die Leitfähigkeit liegt zwischen $10^{-7}$ und $10^{-1}$ S/cm. Nach diesem Verfahren sind die Pyrrolpolymerisate durch den Herstellungsprozeß bedingt in feinverteilter Form homogen in der Polymermatrix enthalten, d.h. es liegen tiefschwarze Pigmente vor, die praktisch nicht agglomeriert sind.

Von den makromulekularen Verbindungen, die in den thermoplastischen Mischungen enthalten sein können, kommen z.B. Polyolefine, wie Hoch- und Niederdruckpolyethylen, Polypropylen oder Polyisobutylen in Frage. Weiterhin eignen sich Styrolpolymerisate, wie Polystyrol oder Copolymerisate des Styrols mit Acrylnitril oder Maleinsäureanhydrid.

Schließlich kommen chlorhaltige Polymerisate, Vinylchlorid oder Vinylidenchlorid in Frage. Geeignet sich auch Polymere von Acrylsäureestern oder Methacrylsäureestern, wie Pyrrolmethylmethacrylat oder Polyacrylsäure-n-butylester. Weiterhin kommen wasserlösliche Polymerisate, wie Polyvinylpyrrolidon oder Polyvinylalkohol in Frage.

Geeignet sind außerdem Polykondensate, die Polyamide, Polyester oder auch Polyacetale oder Polyether, wie Poly-2,5-phenylether. Außerdem kommen in der Natur vorkommende makromolekulare Verbindungen, wie Cellulose oder Umsetzungsprodukte der Cellulose in Frage. Die Polymeren werden so ausgewählt, daß die Molekulargewichte in einem Bereich liegen, bei dem die makromolekularen Verbindungen bei Raumtemperatur in festem Zustand vorliegen. Besonders geeignet sind z.B. Produkte mit mittleren Molgewichten von 5000 bis 250 000, vorzugsweise von 10 000 bis 100 000.

Zweckmäßig verwendet man aus 1 Mol Pyrrol bzw. 1 Mol eines Gemisches aus Pyrrol mit einer anderen mit Pyrrolen copolymerisierbaren Verbindung auf 0,2 bis 10 Mol des Oxidationsmittels. Verwendet man weniger als 1 Mol des Oxidationsmittels, so kann man feststellen, daß ein Teil der verwendeten Ausgangssubstanz nicht zu Polymeren umgewandelt wird. Größere Mengen an Oxidationsmitteln zu verwenden ist nicht erforderlich, da die Menge ausreicht, die gesamte Menge der Ausgangsstoffe in Polymere umzuwandeln. Ein Überschuß über die angegebene Menge hinaus ist daher in den meisten Fällen nicht erforderlich, kann jedoch gelegentlich bestimmte Effekte bewirken. Von den Sauerstoff enthaltenden Oxidationsmitteln haben sich besonders Peroxosäuren un deren Salze, die Peroxodischwefelsäure und deren Akali- und Ammoniumsalze bewährt. Vorzugsweise werden auch Peroxoborate oder Peroxochromate, wie Natriumperborat oder Kaliumbichromat verwendet. Außerdem sind Permanganate, wie Kaliumpermanganat geeignet, wenn man diesen Permanganaten geringe Mengen Säuren zusetzt. Auch ist bevorzugt die Verwendung von Wasserstoffsuperoxid, wobei hierbei die Anwesenheit von Leitsalzen unumgänglich ist.

Geeignet sind auch andere Sauerstoff enthaltende Oxidationsmittel, die Peroxide, Percarbonate oder generell die organischen Peroxide wie Ditertiärbutylperoxid, Benzoylperoxid, Lauroylperoxid oder auch Perketale.

Die Herstellung der Mischungen, die feinteilige Pyrrolpolymerisate enthalten, erfolgt in Lösung, wobei sich organische mit Wasser mischbare Lösungsmittel bewährt haben. Es können organische Lösungsmittel, wie Dimethylsulfoxid, Methylenchlorid, Methanol Ethanol, Acetonitril, Sulfolan, Ethylencarbonat, Propylencarbonat, Dioxan oder Tetrahydrofuran, verwendet werden. Bei der Verwendung von organischen mit Wasser nicht mischbaren Lösungsmitteln, hat sich das Einarbeiten geringer Wasermengen in feiner Verteilung in das organische Lösungsmittel bewährt. Man arbeitet zweckmäßig so, daß die Lösungen 0,1 bis 50, vorzugsweise 1 bis 5 Gew.% des Pyrrols oder der Gemische der Pyrrole, ggf. mit anderen Verbindungen und 0,5 bis 25 Gew.%, vorzugsweise 2 bis 15 Gew.% der makromolekularen Verbindung, enthalten. Die Menge der zuzusetzenden Oxidationsmitteln wird nach dem oben angegebenen Prinzip gemessen. Die Umsetzung kann zweckmäßig in einem Temperaturbereich von 0 bis 100°, vorzugsweise von 15 bis 40°C erfolgen. Meistens bekommt man zu zufriedenstellenden Ergebnissen, wenn die Umsetzung bei Raumtemperatur durchgeführt wird.

Die Gewichtsverhältnisse werden so gewählt, daß in den thermoplastischen Mischungen 10 bis 90, vorzugsweise 40 bis 60 Gew.% der makromolekularen Verbindung und 30 bis 80, vorzugsweise 40 bis 60 Gew.% des Pyrrolpolymerisates enthalten ist.

Die Verbindung aus der Klasse der Pyrrole, die sich für das erfindungsgemäße Verfahren eignen, sind einmal Pyrrol selbst als auch die substituierten Pyrrole, die N-Alkylpyrrole, N-Arylpyrrole, die an den C-Atomen monoalkyl- oder dialkylsubstituierten Pyrrole und die an den C-Atomen monohalogen oder dihalogen substituierten Pyrrole. Erfindungsgemäß können Pyrrol allein oder in Mischung mit anderen Verbindungen aus der Klasse der Pyrrole verwendet werden. Vorzugsweise verwendet man unsubstituiertes Pyrrol selbst. Werden substituierte Pyrrole eingesetzt, so sind das 3,4-Dialkylpyrrol, insbesondere mit 1 bis 4 C-Atomen im Alkylrest, sowie auch die 3,4-Dihalogenpyrrole, insbesondere das 3,4-Dichlorpyrrol bevorzugt.

Es können auch gegebenenfalls geringe Mengen, z.B. zwischen 0,1 und 10 Mol, bezogen auf ein Mol Pyrrol anderer heterocyclischer Verbindungen, die einen konjugierten II-Elektronensystem enthalten, wie Furan, Thiophen oder Thiazol mitverwendet werden.

Den Lösungen können auch Leitsalze zugesetzt werden, die beim Ausschieden des feinteiligen Polymeren die Polymerstruktur mit eingebaut werden, so daß die Leitfähigkeit der erhaltenen feinteiligen Pyrrolpolymerisate hierdurch positiv beeinflußt wird. Diese Leitsalze werden auch als Komplexierungsmittel oder Dotierungsmittel und im englischen Sprachgebrauch als doping-agents bezeichnet.

Als Leitsalze haben z.B. $KHSO_4$, $Na_2SO_4$, $HCOOH$, $LiClO_4$, $HClO_4$, $NEt_4ClO_4$, $NBu_4ClO_4$, $KAlF_6$, $NaAlF_6$, $KBF_4$, $K_2TiF_6$, $K_2ZrF_6$, $K_2NiF_4$, $VO_2(NO_3)_2$, $H_2SO_4$, $FeCl_3$, $NOPF_6$, $KAsF_6$ oder $NaPF_6$ bewährt. Die Konzentration der Leitsalze ist so bemessen, daß auf 3 Mol des eingesetzten Pyrrols oder den anderen Monomeren mindestens 1 Mol der oben aufgeführten Leitsalze verwendet werden.

Nach einem anderen Verfahren kann man die thermoplastischen Mischungen aus makromolekularen Verbindungen und Styrolpolymerisation auch dadurch erhalten, daß man die monomeren Ausgangsprodukte der makromolekularen Verbindungen, also beispielsweise Styrol, Acrylnitril, Acrylsäure oder Methacrylsäureester mit der oder den Verbindungen aus der Klasse der Pyrrole mischt und in Lösung oder Suspension nach dem oben angegebenen Prinzip mit einem Sauerstoff enthaltenden Oxidationsmittel polymerisiert. Bei diesem Verfahren polymerisiert nicht nur das Pyrrol oder das Gemisch aus Pyrrol mit einer mit Pyrrol copolymerisierbaren Verbindung zu einem Polymeren, sondern es wird auch der monomere Ausgangsstoff zu einer makromolekularen Verbindung polymerisiert. Vorzugsweise hat sich dabei ein Verfahren bewährt, bei dem man den monomeren Ausgangsstoff im Gemisch mit dem Pyrrol in wäßriger Suspension und in Gegenwart von Emulgier- oder Suspensionsmitteln unter der Einwirkung des Sauerstoff enthaltenden Oxidationsmittels polymerisiert.

Nach den oben beschriebenen Arbeitsweisen, also durch Polymerisation des Pyrrols in Gegenwart der polymeren Lösung oder der monomeren Ausgangsstoffe, werden Lösungen oder Suspensionen des polymeren Gemisches erhalten. Man kann die Mischungen meist dadurch von der Flüssigphase abtrennen, daß man das Polymergemisch ausfällt, absaugt und wäscht. Es ist aber auch möglich durch Einengen im Vakuum oder im Dünnschichtverdampfer die erfindungsgemäß hergestellen Polymermischungen aufzuarbeiten.

In den erfindungsgemäßen thermoplastischen Mischungen ist das Pyrrolpolymerisat in feinteiliger Form enthalten. Die mittleren Teilchengröße des feinteiligen Polymerisates liegt im Bereich von 0,1 bis 10 µm, vorzugsweise von 0,2 bis 0,5 µm.

Die mittlere Teilchengröße (Gewichtsmittel) der dispersen Weichkomponenten-Phase wurde bestimmt durch Auszählen und Mitteln der zur gleichen Größenklasse (konst. Intervallbreite) gehörigen Teilchen aus elektronenmikroskopischen Dünnschichtaufnahmen. Mit den Volumina der Teilchen (3. Potenz des scheinbaren Durchmessers) innerhalb der Intervalle wird die Verteilungssummenkurve bestimmt. Beim 50%-Ordinatenwert kann auf der Abszisse der Äquivalentdurchmesser dann abgegriffen werden. Die angegebenen mittleren Durchmesser stellen dabei einen Mittelwert von mindestens 1000 Teilchen dar.

Aus den erfindungsmäß thermoplastischen Mischungen können nach den üblichen Verfahrens des Verpressens oder anderer thermoplastischer Verformungen Formkörper hergestellt werden. Es können

3

den Mischungen noch andere Stoffe zugesetzt werden, die die mechanischen oder elektrischen Eigenschaften verändern. So können z.B. die Formmassen mit Produkten, die eine höhere Leitfähigkeit haben, zur Herstellung von Formkörpern Anwendung finden.

Aus den thermoplastischen Mischungen können vor allem Formkörper hergestellt werden, die als elektrische Leiter oder als Elektroden Verwendung finden. Die Massen eignen sich aber auch zur Herstellung von Diaphragmen, elektrischen Speichersystem, Schaltern, Halbleiterbauteilen, Abschirmmaterial oder für Solarzellen.

Die in den Beispielen angegebenen sind Gewichtsteile, die Prozente sind Gewichtsprozente.

Beispiel 1

Zu einer Lösung aus 10 Teilen Polyacrylnitril in 100 Teilen Dimethylformamid werden 6,8 Teile Pyrrol gegeben. Zu dieser Lösung werden unter kräftigem Rühren 65 Teile einer zweimolaren Lösung aus Natriumperoxidisulfat hinzugegeben. Die Umsetzung findet bei Raumtemperatur statt. Die Lösung verfärbt sich nach einigen Minuten in einen tiefdunklen Farbton. Nach etwa 20 Minuten wird das Reaktionsprodukt durch Zugabe von Wasser ausgeflockt und ausfiltriert. Nach dem Waschen mit Wasser und Methanol und Trocknen im Vakuumschrank für die Dauer von 5 Stunden bei einer Temperatur von 50°C und einem Druck von 10 Torr werden 6,5 Teile einer thermoplastischen Mischung erhalten, worin das Polypyrrol in Form feiner Teilchen enthalten ist, die einen Durchmesser von 0,3 bis 0,5 µm haben. Die spezifische Leitfähigkeit dieser Mischung beträgt ca. $10^{-4}$ S/cm.

Beispiel 2

Es wird wie in Beispiel 1 gearbeitet, jedoch werden der Lösung zusätzlich 6,5 Teile Benzolsulfonsäure zugegeben. Es werden 21,8 Teile der thermoplastischen Mischung erhalten, worin die mittlere Teilchengröße des Pyrrolpolymerisates 0,2 µm beträgt. Die Mischung hat nach dem Aufarbeiten und Trocknen eine Leitfähigkeit von $5 \times 10^{-1}$ S/cm.

Beispiele 3 bis 11

Es wird wie in Beispiel 1 beschrieben gearbeitet, jedoch werden die in der Tabelle angegebenen makromolekularen Verbindungen, Lösungsmittel, Leitsalze und Pyrrolmengen zugesetzt.

Tabelle 1

| Bei-spiel | Polymerlösung (Teile) Polymerisat/Lösungsmittel | Zusatz (in Teilen) Leitsalz/Pyrrol | Produktmenge (Teile) | spez. elektrische Leitfähigkeit |
|---|---|---|---|---|
| 3 | Polystyrol/Tetrahydrofuran 6/94 | 5 $LiClO_4$/5 | 12 | $10^{-4}$ |
| 4 | Polystyrol/Tetrahydrofuran 6/94 | 5 $LiClO_4$/10 | 13,5 | $10^{-5}$ |
| 5 | Polystyrol/Tetrahydrofuran 6/94 | 6,5 $N^{\oplus}Bu_4BF_4^{\ominus}$/5 | 10,5 | $8 \cdot 10^{-1}$ |
| 6 | Polyvinylchlorid/THF 10/90 | 6,5 (benzene)–$SO_3H$/5 | 21 | $5 \cdot 10^{-1}$ |
| 7 | Polyvinylchlorid/THF 10/90 | 5 $LiClO_4$/5 | 15,3 | $10^{-4}$ |
| 8 | Polyvinylalkohol/Wasser 10/90 | 6,5 (benzene)–$SO_3H$/5 | 20,6 | $9 \cdot 10^{-1}$ |
| 9 | Polyvinylpyrrolidon/Wasser 10/90 | 6,5 (benzene)–$SO_3H$/5 | 20,3 | $8 \cdot 10^{-1}$ |
| 10 | Polyacrylsäure-n-butylester/ toluol 10/90 | 6 $NBu_4PF_6$/5 | 20 | $5 \cdot 10^{-1}$ |
| 11 | Polyisobutylen/Toluol 5/95 | 5,0 (benzene with $SO_3H$ and –$SO_3H$)/5 | 12 | $10^{-1}$ |

EP 0 154 938 B1

Eine Lösung aus 15 Teilen Acrylnitril und 95 Teilen Dimethylformamid wird auf 60°C erhitzt, 1 Teil Natriumperoxisulfat und 10 Teile Wasser zugeführt und bei einer Temperatur von 80°C polymerisiert. Nach 1 Stunde werden 5 Teile Pyrrol zugegeben und erneut 60 Teile einer wäßrigen zweimolaren Lösung aus Natriumperoxisulfat zugegeben. Es wird weiter gerührt und nach dreistündiger Reaktion bei 70°C werden 250 Teile Wasser langsam zugeführt und das abgeschiedene Produkt abfiltriert. Es wird mit Methanol gewaschen und für die Dauer von 3 Stunden bei 100°C und 10 Torr getrocknet. Die Ausbeute beträgt 18 Teile des Gemisches aus Polyacrylnitril und Polypyrrol. Die mittlere Teilchengröße des Pyrrolpolymerisates beträgt 0,5 µm und die elektrische Leitfähigkeit der Mischung $10^{-4}$ S/cm.

Beispiel 13

Zu 100 Teilen Wasser werden 10 Teile Styrol, 1 Teil Natriumlaurylsulfat und 5 Teile Pyrrol zugegeben. Die Mischung wird unter Rühren und Stickstoff auf 70°C erhitzt. Im Laufe von 3 Stunden werden 60 Teile einer zweimolaren Lösung wäßriger Natriumperoxisulfatlösung zudosiert. Es wird weiterhin 1 Stunde bei 95°C polymerisiert. Danach wird abgekühlt und das Polymergemisch mit Methanol ausgefällt gewaschen und getrocknet. Die Ausbeute beträgt 14,2 Teile eines Gemisches aus Polystyrol und Polypyrrol, das eine spezifische Leitfähigkeit von $10^{-2}$ S/cm hat. Die mittlere Teilchengröße liegt bei 0,3 µm.

Beispiel 14

Es wird in Beispiel 13 gearbeitet, jedoch zusätzlich zu der Lösung noch 5 Teile Natriumbenzolsulfonsäure zugesetzt. Man erhält 17 Teile eines Gemisches aus Polystyrol und Polypyrrol, das eine spezifische Leitfähigkeit von $2.10^{-1}$ S/cm hat.

**Patentansprüche**

1. Verfahren zur Herstellung von thermoplastischen Mischungen, die Pyrrolpolymerisate einer mittleren Teilchengröße von 0,5 bis 10 µm enthalten, die in einer Matrix einer makromolekularen Verbindung eingebettet sind, dadurch gekennzeichnet, daß man eine Lösung der makromolekularen Vebindung mit einer Verbindung aus der Klasse der Pyrrole oder einem Gemisch von Verbindungen der Klasse der Pyrrole und anderen mit Pyrrol copolymerisierbaren Verbindungen mischt und die Pyrrolverbindung bzw. das Gemisch unter der Einwirkung von Sauerstoff enthaltenden Oxidationsmitteln polymerisiert und die erhaltene Mischung vom Lösungsmittel trennt.

2. Verfahren nach Anspruch 1, dadurch gekennzeichnet, daß die Polymerisation der Pyrrole bzw. der Gemische in Gegenwart von Leitsalzen vorgenommen wird.

**Revendications**

1. Procédé de préparation de mélanges thermoplastiques, qui contiennent des polymères du pyrrole d'un calibre moyen des particules de 0,5 à 10 µm, qui sont noyés dans une matrice formée d'un composé macromoléculaire, caractérisé en ce que l'on mélange une solution du composé macromoléculaire à un composé appartenant à la classe des pyrroles, ou un mélange de composés appartenant à la classe des pyrroles et d'autres composés copolymérisables avec le pyrrole et on polymérise le composé du pyrrole ou le mélange, sous l'action d'agents d'oxydation contenant de l'oxygène et on sépare le mélange obtenu du solvant.

2. Procédé suivant la revendication 1, caractérisé en ce que l'on entreprend la polymérisation des pyrroles ou des mélanges en présence de sels conducteurs.

**Claims**

1. A process for the preparation of a thermoplastic mixture containing a pyrrole polymer which has a mean particle size of from 0.5 to 10 µm and is embedded in a matrix of a macromolecular compound, wherein a solution of the macromolecular compound is mixed with a compound from the class consisting of the pyrroles, or with a mixture of a compound from this class and another compound which is copolymerizable with pyrrole, and the pyrrole compound, or the mixture, is polymerized in the presence of an oxygen-containing oxidizing agent, and the resulting mixture is separated from the solvent.

2. A process as claimed in claim 1, wherein the polymerization of the pyrrole, or of the mixture, is carried out in the presence of a conductive salt.